Europäisches Patentamt

European Patent Office

Office européen des brevets

(11) Publication number: **0 194 129**
**B1**

(12) **EUROPEAN PATENT SPECIFICATION**

(45) Date of publication of patent specification: **19.09.90**

(51) Int. Cl.⁵: **G 06 F 13/42, H 04 N 5/44**

(21) Application number: **86301508.7**

(22) Date of filing: **04.03.86**

(54) Electronic apparatus control systems.

(30) Priority: **05.03.85 JP 43384/85**

(43) Date of publication of application:
**10.09.86 Bulletin 86/37**

(45) Publication of the grant of the patent:
**19.09.90 Bulletin 90/38**

(84) Designated Contracting States:
**AT DE FR GB NL**

(56) References cited:
**EP-A-0 089 731**
**DE-A-3 136 355**
**US-A-4 338 632**

**ELECTRONICS INTERNATIONAL, vol. 54, no. 16,
August 1981, pages 97-103, New York, US; T.
FISCHER: "Digital VLSI breeds next-generation
TV receivers"**

**ELECTRONIC ENGINEERING, vol. 56, no. 685,
January 1984, pages 41-48, London, GB; T.
DANBURY et al.: "Small area networks using
serial data transfer. Part 1 - the I2C and CLIPS"**

(73) Proprietor: **SONY CORPORATION
7-35 Kitashinagawa 6-Chome Shinagawa-ku
Tokyo 141 (JP)**

(72) Inventor: **Mogi, Takao c/o Sony Corporation
Patents Division 7-35 Kitashinagawa 6-chome
Shinagawa-ku Tokyo (JP)**
Inventor: **Suematsu, Masayuki c/o Sony
Corporation
Patents Division 7-35 Kitashinagawa 6-chome
Shinagawa-ku Tokyo (JP)**
Inventor: **Fujita, Kosuke c/o Sony Corporation
Patents Division 7-35 Kitashinagawa 6-chome
Shinagawa-ku Tokyo (JP)**

(74) Representative: **Cotter, Ivan John et al
D. YOUNG & CO. 10 Staple Inn
London WC1V 7RD (GB)**

Courier Press, Leamington Spa, England.

## Description

This invention relates to electronic apparatus control systems.

Video and audio equipment, such as television (TV) receivers, video tape recorders (VTRs) and tape recorders, with digital control circuits, are becoming more popular. Most such digitally controlled equipment adopts an inner bus system. The inner bus system incorporates a central processing unit (CPU), an inner bus, a read only memory (ROM) and the like. Operation preset data for each circuit is stored in the ROM. In normal operation, the preset data is read out from the ROM by the CPU. The read out data is supplied to a predetermined circuit through the inner bus so as to allow the circuit to perform a predetermined operation. In such a system, each circuit also can be controlled through the CPU by external operation at a keyboard or a remote control unit. The inner bus used in such an inner bus system can use a communication scheme as disclosed in, for example, Japanese Patent Disclosure No. 57-106252. A bus line adopting this scheme is a two-wire bus line having a data line and a clock line.

In electronic equipment having the above-mentioned inner bus system, adjustment procedures in manufacture and maintenance can be standardised and simplified. Therefore, the total cost, including the manufacturing cost, is expected to decrease.

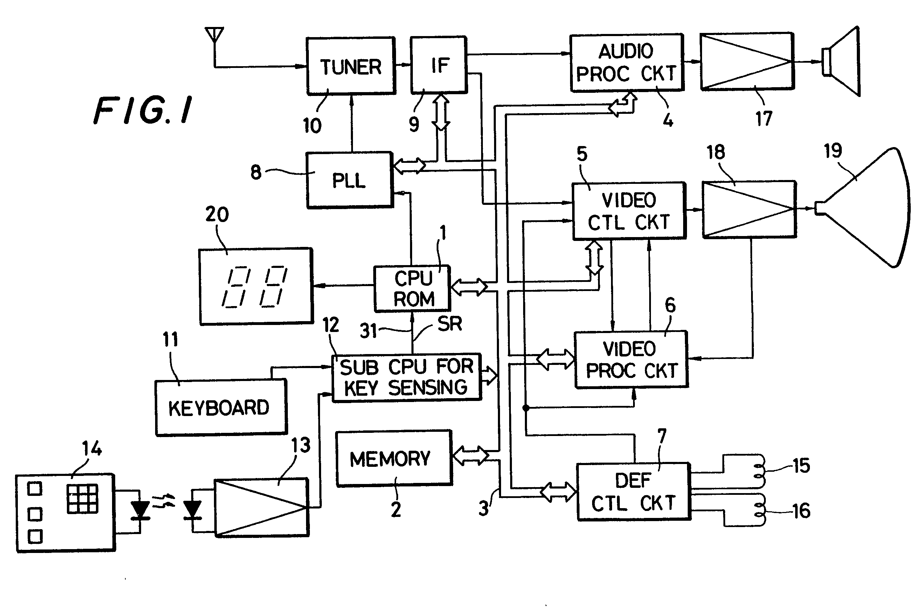

Figure 1 of the accompanying drawings shows the configuration of a TV receiver using the above-mentioned inner bus system to which the present invention is applicable.

The TV receiver shown in Figure 1 has a main CPU 1, a memory 2, an inner bus line 3, and so forth. In this arrangement, controllable circuits include an audio processing circuit 4, a video control circuit 5, a video processing circuit 6, a deflection control circuit 7, a phase locked loop (PLL) circuit 8, and an intermediate frequency (IF) circuit 9. When the TV receiver is operative and commands are supplied from a keyboard 11 or a remote control commander 14 to the main CPU 1 through a subsidiary (sub) CPU 12 for key sensing, the main CPU 1 controls the circuits 4 to 9 in response to the commands. Upon such control operation, tuning, volume adjustment, picture adjustment or the like is performed and the adjustment result is displayed on a display section 20. The main CPU 1 constantly checks the operational states of the circuits 4 to 9 so as to allow them to operate in a predetermined state.

The arrangement illustrated in Figure 1 also comprises a remote control signal receiving circuit 13, deflection coils 15 and 16, an audio output amplifier 17, a video output amplifier 18, and a cathode-ray tube 19.

In the operation of controlling the TV receiver or other video equipment, when control signals are supplied from the main CPU 1 to the respective controllable circuits 4 to 9, or when the circuits 4 to 9 transmit state signals to the main CPU 1, data representing the control or state contents is transmitted together with clock signals. When the clock frequency is increased, radio interference due to noise from the clock pulses appears on the screen of the cathode ray tube 19. In order to avoid this, data transmission is performed only during a vertical blanking interval (hereinafter referred to as a "VBLK interval") of a video or television signal.

The inner bus system as described above is subject to the following problem.

The VBLK interval for data transmission has a time interval of 1.17 to 1.3 milliseconds. When data is transmitted in this interval using clock signals having a frequency of 100 kHz, 117 bits of data can be transmitted during one VBLK interval. Therefore, when 1 byte of data is transmitted together with a single acknowledgement bit, 13 bytes (117/9) of data can be transmitted.

In this manner, the amount of data which can be transmitted during one VBLK interval is limited and, accordingly, the number of communications which can be performed between the main CPU and the controllable circuits during one VBLK interval also is limited. When waiting time and the like is considered, in some cases the main CPU may not be able to check the operational states of all of the controllable circuits within a single VBLK interval. In such a case, the main CPU checks such circuits in the next VBLK interval. This results in a long response time. Such a long response time is undesirable in tuning, picture adjustment or the like by means of a keyboard or remote control commander.

According to the invention there is provided a control system for controlling electronic apparatus that can handle a television signal, the control system comprising:

control circuit means provided with a control program ROM,

circuit blocks to be controlled by the control circuit means, and

a clock line and a data line connected between the control circuit means and the circuit blocks,

the control circuit means being operative to communicate data with the circuit blocks sequentially during a vertical blanking interval of the television signal,

characterised in that

a priority data request signal can be transmitted to the control circuit means from a predetermined one of the circuit blocks, and

the control circuit means is operative to select said predetermined circuit block for priority data communication on receipt of a priority data request signal therefrom.

In this way, at least one predetermined or specific controllable circuit or circuit block can transmit to the control circuit means a priority data request signal which requests communication with priority over the other controllable circuits or circuit blocks.

A priority data request signal from a specific or predetermined controllable circuit or circuit block may be supplied to the control circuit means through the data line. Alternatively, the control circuit means and a specific or predetermined controllable circuit or circuit block may be connected by an additional data request signal line for transmitting a priority data request signal.

The invention will now be further described, by way of illustrative and non-limiting example, with reference to the accompanying drawings, in which:

Figure 1 is a block diagram of a television receiver to which the present invention can be applied;

Figures 2A to 2C are timing charts for explaining data transfer in a two-wire bus line system to which the present invention is applied;

Figures 3A to 3C are timing charts for explaining a mode of operation of a first embodiment of the present invention;

Figure 4 is a flow chart for explaining the mode of operation of the first embodiment of the present invention; and

Figure 5 is a block diagram for explaining a second embodiment of the present invention.

Embodiments of the present invention described hereinbelow basically are directed to a two-wire bus line system having a data line and a clock line.

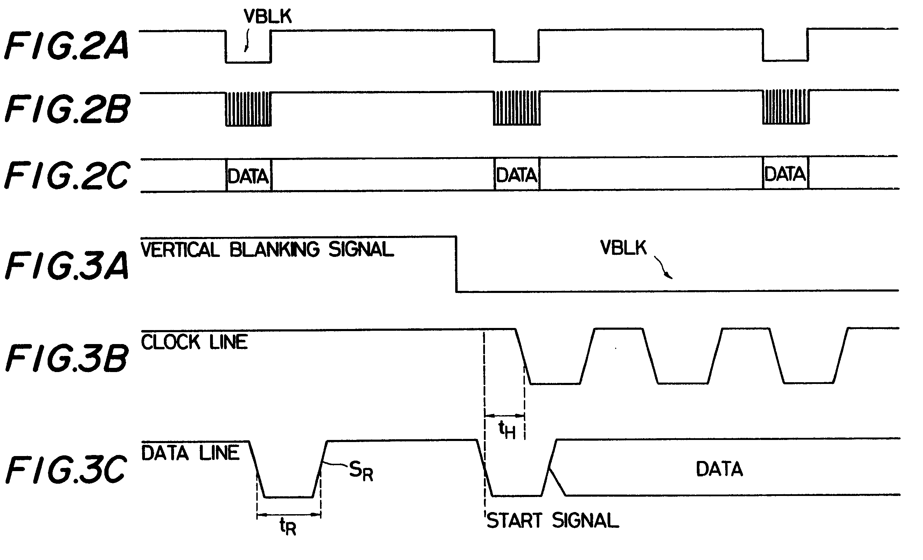

In a two-wire bus line system, in a VBLK interval designated VBLK in Figure 2A, a clock signal is transmitted through the clock line as shown in Figure 2B and data is transmitted through the data line as shown in Figure 2C.

In a first embodiment of the present invention, a specific controllable circuit transmits a request signal $S_R$ to a control circuit such as a CPU. When the request signal $S_R$ is transmitted through the above-mentioned two-wire bus line, it is transmitted through the data line at a timing shown in Figures 3A to 3C.

When data is transmitted through the two-wire bus line as described with reference to Figures 2A to 2C, a low level "L" state of the data line is regarded as a communication start signal (Figure 3C) when the data line goes to level "L" while the clock line is at a high level "H" as shown in Figure 3B and the vertical blanking signal (Figure 3A) is at level "L". A clock signal is transmitted after a time $t_H$ from the start signal, and data is transmitted in synchronism with the clock signal.

The request signal $S_R$ goes to level "L" for a predetermined time interval $t_R$, as shown in Figure 3C, and is outputted at a timing prior to the start signal at times other than the VBLK interval (Figure 3A). The time interval $t_R$ is set to satisfy the relationship that $t_H$ is greater than $t_R$ which in turn is greater than $t_X$, where $t_X$ is a predetermined time interval. When the above relationship is satisfied, level changes within the time interval $t_H$ are determined to be noise and are excluded from signal processing in the two-wire bus line.

When the control circuit receives a request signal $S_R$ from a specific controllable circuit, it communicates with the specific controllable circuit with priority over other controllable circuits. A circuit which requires a particularly fast response is selected as the specific controllable circuit for transmitting the request signal $S_R$. In the case of the television receiver shown in Figure 1, a best result is obtained if the control circuit responds with priority over other controllable circuits when a request signal is received from the keyboard 11, the commander 14 and the like.

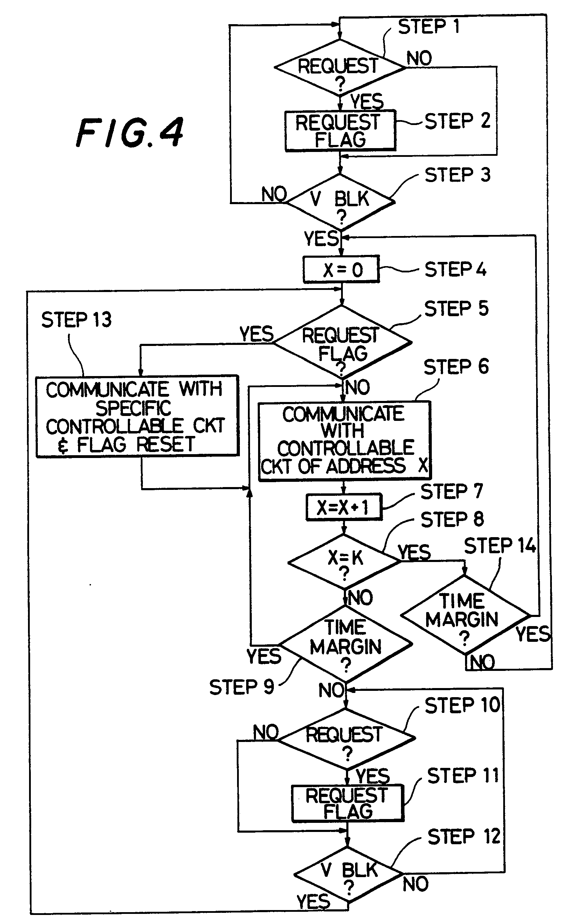

Figure 4 is a flow chart representing communication between the control circuit and controllable circuits in accordance with the first embodiment of the present invention.

In a step 1, a check is made to determine if the request signal $S_R$ is received. When it is determined in the step 1 that a request signal $S_R$ has been received, a request flag is set in a step 2. The system then waits (step 3) until a VBLK interval is reached. When a VBLK interval is reached, an address parameter X is initialised to zero in a step 4. When the address parameter X is initialised in the step 4, the request flag is checked in a step 5. When it is determined in the step 5 that the request flag is not set, communication with a controllable circuit corresponding to the address X is performed at a step 6. However, when it is determined in the step 5 that the request flag is set, communication with a specific controllable circuit is performed first in a step 13 and the request flag is reset. The operation then advances to the step 6. In a step 7, the address parameter is increased by one. In a step 8, a check is made to determine if the address parameter X has reached a predetermined value K. If it is determined in the step 8 that the address parameter X has reached the predetermined value K, this means that the communication cycle for a plurality of controllable circuits has been completed. A check is then made in a step 14 to determine if there is a time margin for further communication. If it is determined in the step 14 that there is no time margin, the operational flow returns to the step 1, whereupon a check is made to determine if a request signal is received and the next VBLK interval is awaited. However, if it is determined in the step 14 that there is a time margin, the operational flow returns to the step 4 and the next communication cycle is started again. When it is determined in the step 8 that the address parameter X has not reached the predetermined value K, the time margin is checked in a step 9 and the operational flow then returns to the step 6. In the step 6, communication with the next controllable circuit is performed. If it is determined in the step 9 that there is no time margin, the flow advances to steps 10, 11 and 12. In the steps 10, 11 and 12, a check is made to determine if a request signal is received and the next VBLK interval is awaited. When the next VBLK interval is reached, the operational flow returns to the step 5 and the request flag is checked. The above operation is repeated thereafter.

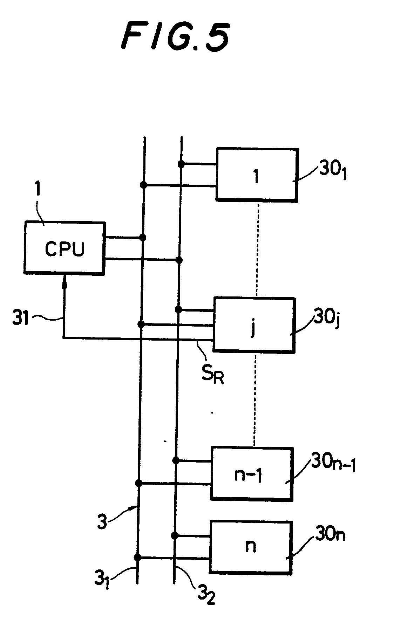

Figure 5 shows a second embodiment of the present invention. As shown in Figure 5, a control circuit 1 comprising a CPU or the like is connected to n controllable circuit $30_1$ to $30_n$ through a two-wire bus line 3. The bus line 3 consists of or includes a clock line $3_1$ and a data line $3_2$. In this

embodiment, a controllable circuit $30_j$ is selected as a specific controllable circuit. The circuit $30_j$ and the control circuit 1 are connected through a request signal line 31.

If it is assumed in Figure 1 that the sub CPU 12 is a specific controllable circuit, a request signal line 31 is arranged to connect the sub CPU 12 and the main CPU 1.

In the first embodiment, since the request signal is superposed on the data line, the request signal cannot be generated during the VBLK interval. In the second embodiment, a request signal line is additionally provided to transmit only the request signal.

With the second embodiment, the request signal $S_R$ can be transmitted at any desired timing. That is, communication with priority can be requested by a selected controllable circuit both within or outside of the VBLK interval. When a request is generated while the control circuit is communicating with another controllable circuit, communication with the circuit which has generated the request is performed after the current communication is terminated. When communication with a controllable circuit which has generated a request cannot be performed within the current VBLK interval due to insufficient time, or when a communication request is generated at a time outside of a VBLK interval, communication is performed with priority in the next VBLK interval.

In summary, in an electronic apparatus having an inner bus line system, a circuit which requires a particularly fast response is controlled or checked with priority over other circuits. In video equipment such as TV receivers, VTRs or the like, efficient communication can be achieved by communication only during the vertical blanking interval.

## Claims

1. A control system for controlling electronic apparatus that can handle a television signal, the control system comprising:
   control circuit means (1) provided with a control program ROM,
   circuit blocks ($30_1$ to $30_n$) to be controlled by the control circuit means (1), and
   a clock line ($3_1$) and a data line ($3_2$) connected between the control circuit means (1) and the circuit blocks ($30_1$ to $30_n$),
   the control circuit means (1) being operative to communicate data with the circuit blocks ($30_1$ to $30_n$) sequentially during a vertical blanking interval (VBLK) of the television signal,
   characterised in that
   a priority data request signal ($S_R$) can be transmitted to the control circuit means (1) from a predetermined one of the circuit blocks (12; $30_j$), and
   the control circuit means (1) is operative to select said predetermined circuit block (12; $30_j$) for priority data communication on receipt of a priority data request signal ($S_R$) therefrom.

2. A control system according to claim 1, wherein said predetermined circuit block (12; $30_j$) is provided with an additional data request signal line (31) connected to the control circuit means (1) for transmission of the priority data request signal ($S_R$).

3. A control system according to claim 1, in which the priority data request signal ($S_R$) can be transmitted from said predetermined circuit block (12; $30_j$) by way of the data line ($3_2$).

4. A control system according to claim 2, in which the priority data request signal ($S_R$) can be transmitted other than during the vertical blanking interval (VBLK) of the television signal.

## Patentansprüche

1. Steuersystem zum Steuern einer elektronischen Einrichtung, die ein Fernsehsignal handhaben kann, welches Steuersystem umfaßt:
   eine Steuerschaltung (1), die mit einem Steuerprogramm ROM versehen ist,
   Schaltungsblöcke ($30_1$ bis $30_n$), die durch die Steuerschaltung (1) zu steuern sind, sowie
   eine Taktleitung ($3_1$) und eine Datenleitung ($3_2$), die zwischen die Steuerschaltung (1) und die Schaltungsblöcke ($30_1$ bis $30_n$) geschaltet sind,
   wobei die Steuerschaltung (1) wirksam ist, um Daten mit den Schaltungsblöcken ($30_1$ bis $30_n$) während einer Vertikalaustastlücke (VBLK) des Fernsehsignals sequentiell auszutauschen,
   dadurch gekennzeichnet, daß
   ein Prioritätsdatenanforderungssignal ($S_R$) von einem vorbestimmten der Schaltungsblöcke (12; $30_j$) zu der Steuerschaltung (1) übertragen werden kann und
   die Steuerschaltung (1) wirksam ist, um den vorbestimmten Schaltungsblock (12; $30_j$) zum Zwecke eines Prioritätsdatenaustausches auf den Empfang eines Prioritätsdatenanforderungssignals ($S_R$) aus diesem hin auszuwählen.

2. Steuersystem nach Anspruch 1, bei dem der vorbestimmte Schaltungsblock (12; $30_j$) mit einer zusätzlichen Datenanforderungssignalleitung (31) versehen ist, die mit der Steuerschaltung (1) zur Übertragung des Prioritätsdatenanforderungssignals ($S_R$) verbunden ist.

3. Steuersystem nach Anspruch 1, in dem das Prioritätsdatenanforderungssignal ($S_R$) von dem vorbestimmten Schaltungsblock (12; $30_j$) mittels der Datenleitung ($3_2$) übertragen werden kann.

4. Steuersystem nach Anspruch 2, in dem das Prioritätsdatenanforderungssignal ($S_R$) während eines anderen Zeitabschnitts als während der Vertikalaustastlücke (VBLK) des Fernsehsignals übertragen werden kann.

## Revendications

1. Système de commande pour contrôler un appareil électronique qui peut manipuler un signal de télévision, le système de commande comprenant:
   des moyens de commande de circuit (1) comprenant un programme de commande en mémoire morte ROM,

des blocs de circuit (30₁ à 30ₙ) à commander par les moyens de commande de circuit (1), et

une ligne d'horloge (3₁) et une ligne de données (3₂) connectées entre les moyens de commande de circuit (1) et les blocs de circuit (30₁ à 30ₙ),

les moyens de commande de circuit (1) fonctionnant de façon à communiquer les données avec les blocs de circuit (30₁ à 30ₙ) de manière séquentielle pendant un intervalle d'effacement de trame verticale (VBLK) dans le signal de télévision,

caractérisé en ce que

un signal de requête (S_R) de données prioritaires peut être transmis aux moyens de commande de circuit (1) depuis l'un (12; 30ⱼ) prédéterminé des blocs de circuit, et

les moyens de commande de circuit (1) fonctionnent de façon à sélectionner ledit bloc de circuit prédéterminé (12; 30ⱼ) pour une communication de données prioritaires à la réception d'un signal de requête (S_R) de données prioritaires qui en provient.

2. Système de commande selon la revendication 1, dans lequel ledit bloc de circuit prédéterminé (12; 30ⱼ) comporte une ligne supplémentaire de signal de requête de données 31 connectée au moyen de commande de circuit (1) pour transmettre le signal (S_R) de requête de données prioritaires.

3. Système de commande selon la revendication 1, dans lequel le signal (S_R) de requête de données prioritaires peut être transmis depuis le bloc de circuit prédéterminé (12; 30ⱼ) au moyen de la ligne de données (3₂).

4. Système de commande selon la revendication 2, dans lequel le signal (S_R) de requête de données prioritaires peut être transmis à un autre moment que pendant l'intervalle d'effacement vertical VBLK du signal de télévision.

EP 0 194 129 B1

# FIG.1

FIG.2A

VBLK

FIG.2B

FIG.2C

DATA    DATA    DATA

FIG.3A

VERTICAL BLANKING SIGNAL

VBLK

FIG.3B

CLOCK LINE

$t_H$

FIG.3C

DATA LINE

$S_R$

DATA

$t_R$

START SIGNAL

EP 0 194 129 B1

FIG.4

EP 0 194 129 B1

3

# FIG.5